# EUROPEAN PATENT APPLICATION

(11) **EP 0 955 205 A1**
(43) Date of publication of application: **10.11.1999**
(21) Application number: 98830453.1
(22) Date of filing: 24.07.1998
(51) Int. Cl.: B60N 3/18

(54) **Automatic distributor for liquids at selected temperatures for motor vehicles**

(30) Priority: 08.05.1998 IT RM980302
(71) Applicant: Amendola, Carlo, 96100 Siracusa (Sicily) (IT)
(72) Inventor: Amendola, Carlo, 96100 Siracusa (IT); Salesi, Giovanni, 96100 Siracusa (IT); Salesi, Umberto, 96100 Siracusa (IT)

(57) **Abstract**

Everybody knows that during a trip, after having crossed many miles who doesn't have the need of taking a drink in a practical and fast way in order not to waist time at petrol stations, fast foods, or self-service, most times this is impossible.

After the installation of the entitled kit :
MOTOR-VEHICLE* LIQUID AUTOMATIC DISTRIBUTOR AT SELECTED TEMPERATURES the problem is resolved in simple and automatic way.
*** Note: For motor vehicle or motocar it is intend all means of transport existing today.**

The invention allows with simple operations, to have in side the cabin drinks that you can select at your choise (warm or cold), for you or for the other passengers, exploiting the refrigerant liquid of the air conditioning plant, that nearly all trasport means have, where missing we will provide the installation of the whole system, our system can be utilized.

Putting a glass on the special mounted support on top of the motor car*'s dashboard programming the desired temperature of the drink, and pressing the botton for filling up the glass.

The system is programmed with precision and in an automatic and instant way.

## Description

### Technical Field

The invention is addressed to the technological sector regarding motorvehicle * in general, that is developing new technologies in the last decade, fit to improve new demands, comfort and safety for the passengers, inside the cabin.
*** Note: For motor vehicle or motocar it is intend all means of transport existing today.**

The general panel of control, will be installed on top of the motorcar*'s * dashboard, and through visul or signal sounds, will give in every moment the state of operation of the system.

All the system is in full respect of the safety parameters and comfort has been realized for the passengers.

### The Actual Technological

The actual technological state foresees the air conditioning of the environment inside the cabin* without the possibility to exploit the same to refrigerate or to heat liquid e/or drinks.

### The Principle of Invention

The principle for which the invention is effected, is founded essentially on the ability of the fluid refrigerant contained in the cycle of the air conditioner, to absorbor to send heat in remarkable quantity when it suffers change of state, and to exploit it through apparatuses and instrumentations planned in our system such to make refrigerate or to heat a drink inside the cabin*.

### The Actual State

To the actual state the apparatuses at the moment available for air conditioning inside the cabin* are:
- 1) presser;
- 2) condenser;
- 3) drier filter;
- 4) valve of expansion;
- 5) liquid vaporizer;
- 6) system of ventilation;
- 7) in/out high pressure pipes, to join the circuit of the refrigerant liquid;
- 8) refrigerant liquid.

In the circuit above described, there was space for of an optional system or of such apparatuses that can exploit the same to refrigerate or to heat liquid inside the cabin* as forseen in our invention.
*** Note: For motor vehicle or motocar it is intend all means of transport existing today.**

### Discosure of Invention: Cold Cycle.

As far as production of refrigerated liquids is concerned, 0°C or higher, our patent, works essentially connecting it to the existing pipeline of the air conditioning plant, whit a new pipeline going out from the condenser, as shown on the sketch n^{o}98 D.A.L.A.T. Vs. / 001 rev.0, sheme mechanical list tools,called graft n^{o} 1, with a "T" compression joint (Fig.N.1).

The refrigerant fluid feeds both the original air condition system, and the new system utilizing a new pipeline ½" inch for high pressure.

After the pipeline, an expansion brass valve ½" inch will be connected with item VE-01(FIG.N.2), installed at the entrance on the side shell of the heat exchanger, item E-01.

In this case, the refrigerant liquid crossing the valve of expansion, item VE-01, will suffer a drastic reduction of pressure and therefore of temperature.

Coming in to contact with the heat exchanger, item E-01 it will produce cold. The new pipeline from ½" inch of high pressure, coming out of the side shell of the heat exchanger, item E-01(FIG.N.2),it will bring the liquid to the aspiration of the existing presser (or new), item C-01(FIG.N.1), through"T"compression joint, on the exsting pipeline graft n^{o}2.

In this case, the cold created inside the heat exchanger, item E-01(FIG.N.2), will be transferred to the tube bundle.

The logic of regulation of the set point of temperature, dell'E-01, (FIG.N.2), will be regulated from a termoresistance inside, item TR-01, the heat exchanger, item E-01 connected to, side pipes, and a transmitter of temperature, item TT-01, that connected to the temperature control unit, item TIC-01, with the setting the selected temperature 0° - 80° C, will send a signal to the modulation control electrovalve, item XV-02 (FIG.N.1) in connection with graft n^{o}2"T"position which will regulate the refrigerate fluid flow and therefore the out coming temperature from the exchenger, item E-01, side pipe bundle (FIG.N.2).

At the reached temperature the electrovalve, item XV-02, and the electrovalve, item EV-03(FIG.N.1), installed on the grafts n^{o}1 & 2,"T" position, will intercept the refrigerant fluid, as inserted on the electronic system, item I-7 (FIG.N.1).

At the heat exchangers exit, item E-01(FIG.N.2), pipe bundle side, the liquid will circulate through a pump, item P-01(FIG.N.3).

The liquid will cross throgh a three line control electrovalve, item XV-01, (FIG.N.4), that is normally opened on side 2-3, and this will recycle the liquid to be refrigerated, inside the stocking tank, item V-01 (FIG.N.5), up to a point in which the temperature control system throngh a thermo-resistance, item TR-02, will transmit a signal to the temperature transmitter, item TT-02, that will transduce the signal, item TSH-01 and will send an electric impulse, item I-02, for the start-stop of the pump,item P-01(FIG.N.3).

The push-botton, item HS-01(FIG.N.4), will have the purpose to activate the logical system, item I-01 / I-02, with the following scope:
- a) to verify the set point of temperature;
- b) activating the pump, item P-01, after reaching set point of temperature;
- c) activating the solenoid, item LY-01(FIG.N.4), to exchange the line 2-3, to 2-1, some electrovalve of control item XV-01,after reaching set point of temperature;
- d) opening on-off the electrovalve, item XV-3 (FIG.N.4),after reaching set point of temperature.

The timer, item KE-01(FIG.N.4),with manual set point, will have the assignment to disarm the systems, item I-1/ I-2, in relationship to the phase of filling capacity of the glass (FIG.N.4).

The tank, item V-01/A (FIG.N.5), will be of nontoxic material for food, removable and insulated.

The top side of the tank forsees the installation of one nozzle for filling, one nozzle for vent and instrument, as above described.

The interrupter of low level, item LSL-01 (FIG.N.5), will show :
- a) the lower part level of the liquid of the tank, item V-01/A,
- b) low level alarm, item LAL-01, through visul or sounds signal to the panel control system indicating whenever the tank needs to be refilled.

The pump, item P-01(FIG.N.3), in the aspiration of line from the tank will be supported with a on-off electrovalve, item EV-01 (FIG.N.5), of a temporary filter, item TS-01, and one the check valve, item CV-01, on the out going line.

### Warm cycle

For liquids to be produced at a temperature higher than 30° C up 80° C the system forsees a resistance inserted inside the tank, item V-01/B (FIG.N.5) made from the same kind of material as the tank, V-01/A, with a logic inserted in the system, item I-4 that forsees :
- a) thermoresistance, item TR-03, necessary to heat the liquid;
- b) temperature control, item TIC-02, whit manual setting 0°- 80° C manual panel, for the thermoresistance, item TR-03;
- c) start resistance push-botton, item HS-03;
- d) light showing temperature, item HA-01, that refers to the panel control system or signal sound.

The tank will have a switch to show low level, item LSL-02, that will indicate :
- a) the low level of liquid inside the tank,item V-01/B;
- b) low level alarm system,item LAL-02, that manates sounds or visual signals to the panel control system.

The pump,item P-02 (FIG.N.6), will have on the suction pipeline, an on-off electro-valve (normally closed), item EV-02,that has the scope of intercepting the liquid with the high feeding plant not in tension and a temporary filter, item TS-02.

The same, on the outgoing pipeline, will be inserted on an electro-valve, item XV-04, together with a check -valve, item CV-02 with the scope of intercepting the out going liquid through a logic system, item I-3, that by means of push-botton, item HS-02 (FIG.N.4), will give adjustmen to the start-stop system of the pump, item P-02, timed by KE-02 (timer) related to the filling up of the glass.
* **Note: For motor vehicle or motocar it is intend all means of transport existing today.**

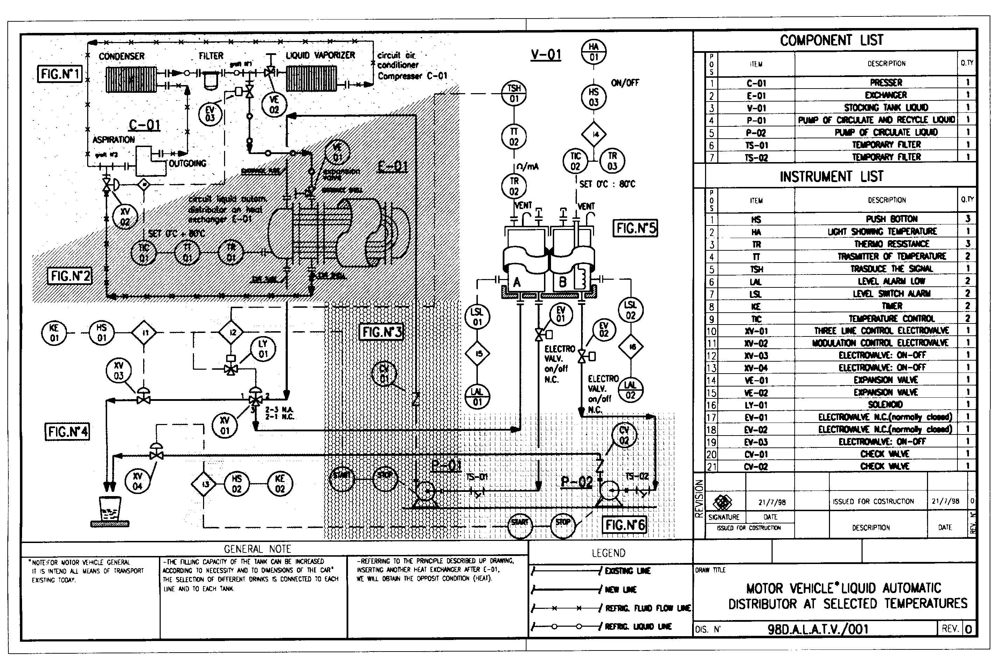

## Claims

1. a system that uses the refrigerant liquid utilized from the cycle of an air conditioning system plant of any sort of motor, that utilizing apparatuses and instrumetations provided and studied by ourselves, will give the possibility of refrigering and heating of any kind of drink desired inside your own car*;

2. any kind of drink choosen by yourself can be selected at any grade of temperature you desire (warm, hot or cold) without bringing useless and undesired containers behind you or without lost of time; such as :
- a) frigo-bar;
- b) automatic drink distributors;
- c) thermos;
- d) bottles;
- e) containers;
- f) without stopping. of car*.

3. The filling capacity of the tank can be increased according to necessity and to dimensions of the car*. The selection of different drinks is connected to each line and to each tank.

4. Referring to the principle described in point 1, as shown drawing (P&I DIAGRAM) :
n^{o} 98-D.A.L.A.T.V./001 rev.0 (FIG.N.2), inserting another heat exchanger after E-01, we will obtain the opposit condition (heat).
All the systems that refer to the principles described in this present patent and as above claimed, any apported revisions or modifications, will be considered copied from this document.
